# EUROPEAN PATENT SPECIFICATION

(11) **EP 0 346 559 B1**
(45) Date of publication and mention of the grant of the patent: **10.11.1993**
(21) Application number: 88890149.3
(22) Date of filing: 13.06.1988
(51) Int. Cl.: B27N 1/00

(54) **Method of molding using dissociated lignocellulosic material and the product so produced**
Formverfahren mit dissoziiertem lignocellulosischem Material und so hergestelltes Produkt
Méthode de formage utilisant du matériel lignocellulosique dissocié et le produit ainsi produit

(43) Date of publication of application: 20.12.1989
(73) Proprietor: TIGNEY TECHNOLOGY INC., Sherwood Park Alberta T8A 4T6 (CA)
(72) Inventor: De Long, Edward Albert, Sherwood Park, Alberta T8A 4T6 (CA); De Long, Edward Paul, Sherwood Park, Alberta T8A 4T6 (CA); Ritchie, George S., Winterburn, Alberta T0E 2N0 (CA)
(74) Representative: Pawloy, Heinrich, Dr.

(56) References cited:
- CA-A- 1 141 376
- CA-B- 1 217 765
- US-A- 4 627 951
- US-A- 4 751 034

## Description

### Field of the Invention

This invention relates to a method for producing a molded product from dissociated lignocellulosic material and to the product of this process. It also relates to the use of dissociated lignocellulosic material as a binder to replace in whole or in part the phenolic resins which are normally used in the production of plywood, waferboard, oriented strand board, particleboard and other molded products.

Dissociated lignocellulosic material, the starting material for the molding process described herein, is produced by a process of explosive depressurization. The explosion process utilizes lignocellulosic material, which includes such plant growth materials as oat hulls, corn stalks, bagasse, wheat straw, oat straw, barley straw, rice straw and woods of various species. The explosion process comprises the following steps: (1) packing the lignocellulosic materials in a divided, exposed, moist form in a pressure vessel having a valved outlet; (2) with the valve closed, rapidly filling the pressure vessel with steam at a pressure of at least 2,750 Kpa (400 psi) to bring substantially all of the lignocellulosic material to a temperature in the range 185°C to 240°C in less than 60 seconds to thermally soften the lignocellulosic material into a plastic condition: and (3) as soon as the plastic condition has been attained, opening the valued outlet and instantly and explosively expelling the lignocellulosic material from the pressure vessel to atmosphere. This explosion process breaks the chemical crosslinks between the lignin and hemicellulose and produce, a mixture of chemical substances. This mixture, referred to in this specification as "dissociated lignocellulosic material", is a particulate substance having the appearance of potting soil. It consists primarily of cellulose, lignin, acetic acid, glucuronic acid, furfural, xylose sugars and xylan, which substances are substantially chemically dissociated from each other. The steam explosion process is further described in CA-A-1,141,376 and CA-A-1,217,765 to DeLong, granted 15 February, 1983, respectively 10 February, 1987, and the apparatus used in the process is illustrated and described therein.

### Summary of the Invention

It has previously been conceived that dissociated lignocellulosic material would be used as an animal feedstuff, or as a starting material from which the various chemical components of the mixture could be obtained. However, it has now been found that it is possible to recombine the dissociated components of the mixture produced by the process of explosive depressurization of lignocellulosic materials into a heavily crosslinked matrix by subjecting the mixture to heat and pressure in a mold. Various combinations of molding pressure and temperature and mold dwell time may be used to vary the degree of crosslinking of the material and thereby control the strength and density of the end product.

The invention therefore provides a method of molding material comprising the following steps:
(A) preparing dissociated lignocellulosic material for molding, by;
   (1) packing lignocellulosic material in a divided, moist form in a pressure vessel having a valved outlet,
   (2) with the valve closed, rapidly filling the pressure vessel with steam at a pressure of at least 2,750 Kpa, (400 psi) to bring substantially all of the lignocellulosic material to a temperature in the range of 185°C to 240°C in less than 60 seconds to thermally soften the lignocellulosic material into a plastic condition,
   (3) as soon as the plastic condition has been attained, opening the valved outlet and instantly and explosively expelling the lignocellulosic material from the pressure vessel to atmosphere,
      and, wherein the explosive expulsion breaks the chemical cross-link between the lignin and hemicellulose of the lignocellulosic material and produces a mixture of water-soluble chemical substances, whereby dissociated lignocellulosic material is produced;
(B) washing the said dissociated lignocellulosic material with water to remove substantially all or only some of the said water-soluble chemical substances;
(C) adding a cross-linking agent and catalyst therefor to the washed dissociated lignocellulosic material to provide a moldable dissociated lignocellulosic material, said cross-linking agent being selected from the group consisting of a five carbon sugar, a six carbon sugar, their glycosides and conjugates, furfural, and, hydroxymethylfurfural and mixtures thereof, paraformaldehyde, or some other crosslinking agent, and said catalyst being an acidic catalyst:
(D) drying the moldable dissociated lignocellulosic material to a water content of about 5% or less
(E) packing the moldable material into a heated, vented mold;
(F) applying sufficient pressure in the range of 135 - 10,400 kPa (20 - 1,500 psi) for a sufficient time in the range of 5 seconds to 30 minutes and at a sufficient temperature in the range of 70°C to 260°C to the moldable material in the mold to cause it to form a rigid product; and
(G) discharging the molded product form the mold.

In a preferred embodiment, the molded product may be cured to relieve internal stresses by placing it under pressure in an unheated mold.

In addition, it has been found that it is possible to make a molded product from a mixture of dissociated lignocellulosic material and various fibrous or woody materials. In this case, the dissociated lignocellulosic material acts as both a filler and a binder. Further, the dissociated lignocellulosic material in acting as a binder can encapsulate a variety of other aggregates such as coal, asphalt, fiber glass, and other non-woody materials.

The economics of producing molded board and other products is improved significantly by the removal of the water soluble fraction of the dissociated lignocellulosic material, and separating the isolated chemicals. This is especially true because the cost of replacement crosslinking chemicals is markedly less than the value of the water-solubles. A preferred method of extracting the water-soluble chemical compounds from dissociated lignocellulosic material comprises placing the material in a column having an upper and a lower opening, adding the water through the top opening, and, without agitating the contents of the column, allowing the solvent to percolate down through the dissociated lignocellulosic material, under the force of gravity, and then removing the solvent and dissociated substances through the lower opening of the column. Aqueous solutions of lignin crosslinking compositions can then be added to the column for wet mixing, by percolation as for water washing. The column contents are then removed, dewatered, then further dried as necessary to lower moisture levels. The resulting product can be molded in the same manner as that described herein for dissociated lignocellulosic material that has not been treated in this manner.

### Detailed Description of the Preferred Embodiment

Dissociated lignocellulosic material freshly produced by the processes described above and in CA-A-1,096,374, CA-A-1,141,376 and CA-A-1,217,765 will normally contain excessive moisture, that is, a level of moisture that will hamper the molding process. It has been found that drying the material prior to molding it until the water content is about 5% produces good results. This drying may be carried out by simply exposing the material to air at ambient temperature for a sufficient length of time. The precise water content is not critical to the molding process as it will still work, though less well, if somewhat more or less moisture is present.

Once the water content has been thus reduced, the material may be packed or injected into a mold of the desired size and shape. The molded product has been found to be a suitable substitute for particleboard, waferboard, fibreboard, hardboard, plywood and the like, so the mold may be shaped accordingly.

The molding pressure, temperature and dwell time selected will depend on the type of product desired.

The molding may take place over a wide range of temperatures. The crosslinking reactions that occur during molding take place more quickly at higher temperatures. It has been found that as the molding temperature is increased, the density of the product increases at constant pressure. Temperatures in the range of about 70°C to 260°C have been found useful in producing a general-purpose product. The desired molding temperature may be achieved by preheating the mold, and in this specification "molding temperature" means the temperature of the mold. Whether all of the material in the mold is heated to this temperature depends on the thickness of the mold and the dwell time. Alternatively, it is possible, when molding large volume products, for instance, railroad ties or structural components, to preheat the starting materials rather than, or in addition to, heating them in the mold. Preheating the material should be carried out in a closed vessel to prevent the escape of furfural and the like.

The molding pressure may also be selected from a wide range of pressures, depending on the desired density of the molded product. It has been found that molding pressures from about 135 - 10,400 kPa (20 - 1,500 psi) may be used. Pressures in the range of 4,100 - 4,800 kPa (600 - 700 (psi) can be used to produce a good general-purpose product.

To make a molded product similar to cork, a molding temperature of about 70-110°C and a molding pressure of about 135 - 620 kPa (20 - 90 psi) may be used. Such a product might be used to encapsulate slow release nutrients in a biodegradeable planting pot.

It is possible to produce a low density molded product having increased toughness and water resistance by molding at relatively low temperature (e.g. 70°-120°C) and then applying a mold platen heated to about 300°C for a short time. This plasticizes the cellulose at the surface of the molded product.

To make a molded product having a density similar to that of furniture board (medium density), a molding temperature of about 120 - 145°C and a molding pressure of about 690 - 4,800 kPa (100 - 700 psi) may be used.

To produce a high density molded product, a molding temperature of about 120-165°C and a molding pressure of about 4,800 - 10,400 kPa (700 - 1500 psi) may be used. Using suitably high pressures and temperatures it is possible to produce a very high density material which could be used, for example, to replace slate in pool table tops. Such a product is so dense that a .22 caliber rifle bullet, fired from close range, will not penetrate beyond 4 or 5 mm.

The dwell time in the mold may vary over a wide range depending on the thickness of the board and the desired density of the product. The material acts as an insulator; a thicker molded product requires more time for the heat from the mold to fully penetrate it and for it to cure after crosslinking occurs. To achieve uniform crosslinking across the thickness of the product, longer dwell times can be used, and the temperature may be reduced accordingly. It has been found that for a given temperature, pressure and thickness, increased dwell time results in increased product density. Dwell times in the range of about 5 seconds to 30 minutes have been used with success.

The mold should be vented to permit the continuous escape of steam and other gases produced during molding.

In some cases, the molded material should be permitted to cure after molding to relieve internal stresses. For high density material, a longer cure time is required and it may be desirable immediately after molding to transfer the molded product to an unheated mold at pressures similar to the molding pressure to allow the product to cure.

When dissociated lignocellulosic material is molded in the manner described, the lignin crosslinks with furfural, fatty acids and xylan. As the molding temperature is increased, up to about 240°C, the acids in the dissociated lignocellulosic material react at an increasing rate with the xylan and xylose sugars to produce higher concentrations of furfural, which will in turn increase the degree of crosslinking with the lignin, thereby producing a denser and stronger product. By controlling these reactions, one can vary the strength, water resistance and density of the molded product.

In practice, and in accordance with the present invention, in order to increase the speed of the reaction or lower the molding temperature, or both, an acid catalyst (such as a mineral acid, an organic acid, or a Lewis acid or a mixture thereof) is added to increase the rate and degree at hydrolysis of the xylan and xylose sugars to furfural, which in turn increases the degree of crosslinking with the lignin. Also added is five or six carbon sugars either free or combined as glycosides or as short chain oligosaccharides, furfural, hydroxymethyfurfural and mixtures thereof, paraformaldehyde, or some other crosslinking agent to the dissociated lignocellulosic material to produce a higher degree of crosslinking than happens with only the furfural which is produced from the xylose and the xylan in the material both during the explosion process and during the heating cycle in the mold.

In the process described above, the dissociated lignocellulosic material forms both the filler and the binder of the molded product. However, the invention is also directed to the use of dissociated lignocellulosic material in association with such materials as sawdust, wood wafers, wood fibers, straw fibers, bagasse fibers, fiber glass fibers, asbestos fibers, carbon fibers, coal, sand and the like. Here the dissociated lignocellulosic material contributes to the molded product as a filler, but is intended to act primarily as a binder, replacing in whole or in part the phenolic resins and similar substances that are commonly used as binders when such materials are molded. If used, these materials should be mixed thoroughly with the dissociated lignocellulosic material prior to molding.

Generally, the higher the proportion of these materials, the softer the molded product. For example, to produce a relatively soft end product, sawdust may be mixed with the dissociated lignocellulosic material to be molded in a ratio of about 4 parts sawdust:1 part dissociated lignocellulosic material. To make a firmer board, ratios of 1 part or less sawdust:1 part dissociated lignocellulosic material may be employed.

It will be apparent to one skilled in the art that various mixtures of these filler materials may be used and various combinations of molding pressure, temperature and dwell time employed to produce a molded product having the characteristics desired for a particular application. Also, preservatives, water repellants, fire retardants and the like can be added to the material before molding to produce those additional characteristics when required.

It is also possible to mix fertilizer material with the material to be molded, prior to molding. The resulting product will permit the slow release of the fertilizer into the soil, avoiding the rapid run-off and contamination of waterways that often occurs when fertilizer is used by farmers.

Substantially all or only some of the water-soluble substances in the dissociated lignocellulosic material are removed by washing with water. This removes most of the crosslinking capability of the mixture. The water-soluble substances include acetic acid, glucoronic acid, vanillin, syringaldehyde, plant protein, furfural, inorganic salts, xylose and xylose oligomers.

In order to restore the binding properties of the water-washed, dissociated lignocellulosic material it is necessary to add crosslinking compositions. Typically such compositions would include an acidic catalyst (one or more of the set of mineral acids like sulfuric acid, organic acids like acetic acid, or Lewis acids like zinc chloride) in conjunction with a carbohydrate component consisting of five-carbon sugars, such as those in the water-solubles extracted from the dissociated lignocellulosic material, or six-carbon sugars, their glycosides or short chain oligosaccharides, or a mixture of five-carbon and six-carbon sugars. The active crosslinking agent during the molding process is furfural if the source is a five-carbon sugar, and hydroxymethylfurfural if a six-carbon sugar. Therefore, furfural or hydroxymethylfurfural and the like may replace or supplement the amorphous carbohydrate component in the composition. It is our experience that the hydroxymethylfurfural is a markedly superior crosslinking material, thus a six-carbon sugar is preferred.

To remove the water-soluble substances, the dissociated lignocellulosic material is washed in a column. This can be done using a column having an upper opening through which solvent can be added and the dissociated lignocellulosic material put into the column, and a lower opening for the removal of the eluant. (In this specification, "eluant" means a solvent with its dissolved or suspended materials which is removed from the column.) The column can conveniently be a cylinder or rectangular tube open at the top and having a drainage system at the bottom leading to a line and vessel for recovering the eluant. The column can be filled to various heights with dissociated lignocellulosic material, depending on the degree of leaching desired. The inventor has obtained good results with a 1,5m (five foot) high column of material, but heights from 0,3m (one foot) to over 6m (twenty feet) have been used successfully.

Water occurs naturally in the lignocellulosic material and more is added by absorption during the first stage of the explosion process. Hence, the water soluble fraction of the dissociated lignocellulosic material is already dissolved in the water in the material.

Packing or compressing of the material in the column hampers solvent flow and is therefore to be avoided. Water is then added to the column. The fluid percolates down through the bed, pushing the slug of connate water containing the water solubles ahead of it. The solution which exits at the bottom of the column is initially very concentrated, but, because not all channels for fluid flow are swept by the incoming fluid at the same rate due to their different pore or channel sizes, perfect plug flow is not realized and the concentration of dissolved matter falls off exponentially. Water extractable substances comprise approximately 25% by weight of the dissociated lignocellulosic material (on a dry basis). For a 1,5m (five foot) high column of loosely filled dissociated lignocellulosic material, more than 99 percent of the water solubles can be removed with only two column volumes of water.

After water-washing, the dissociated lignocellulosic material is essentially free of chemical reagents which are capable of crosslinking with the lignin. If desired, the dissociated lignocellulosic materials may be washed less thoroughly so that only some of the crosslinking chemical reagents are removed.

In order to recover the binder qualities of the material, it is necessary to add an appropriate crosslinking composition. Typically such a composition would include a water-soluble acid (such as sulfuric acid, or acetic acid) together with a 5-carbon or 6-carbon sugar (or a mixture of a 5-carbon and a 6-carbon sugar) in free form or glycosides or in conjugates such as low molecular weight oligosaccharides. These carbohydrates may be obtained from the water-solubles that were washed from the dissociated lignocellulosic material. The crosslinking composition, which may contain acid in strengths of 0.2 to 1.0% and sugars in the concentration range of 2-12%, is added to the top of the column and allowed to drain through the material. Initially, water from the previous wash exits the column in plug flow. Sufficient composition is added such that the pH of the aqueous eluant exiting the column is as low as the column's entry solution indicating that the acid is leaving the column having wet the entire column's contents equally. At this point, the material is removed from the column, dewatered as much as practical, and then further dried in air or a heated drier. The material can then be milled or ground to produce a fine powder suitable for use as a binder. Prior to molding, the dried material may be mixed with the fibrous aggregate materials, preservatives, water-resistant agents, and flame retardants as required by the specification. To improve the water resistance of the molded product when water absorbing fillers such as saw dust or wood chips are used, the saw dust or wood chip material can be impregnated with the acid/carbohydrate crosslinking material. This will produce furfural or hydroxymethylfurfural at the binder/filler interface to create a seal around the filler. In general, the material can be used for molding in the same manner as dissociated lignocellulosic material that has not been subjected to the water-washing process.

In some cases it is desired to use the molded finished product for combustion and an aggregate material such as coal will be incorporated into the product. Here, there may be mixed with the crosslinking composition, before adding it to the column, agents which promote combustion (such as nitrate salts), and flame colouration materials (various inorganic salts depending upon colours desired). Such molded combustibles may ultimately take the form of firelogs or briquet-like chunks.

In the case where neither mineral or organic acids are used in the crosslinking composition, but a Lewis acid salt is employed instead, then this salt must be mixed in the dry form and ideally with material having a moisture content lower than 1%.

Insofar as the acid behaves as a catalyst, small quantities are used, but the absolute amount required may depend on the nature of the fibrous or aggregate material, and its ability to withdraw the acid from the crosslinking carbohydrate material by capillary action. Typically, a solution of less than 1% by weight of acid catalyst is required. In whole dissociated lignocellulosic material, the amorphous carbohydrate content is in the range of 15% to 25% depending on the input lignocellulosic material. By water-washing the dissociated lignocellulosic material and combining with other crosslinking carbohydrate agents, this amount of sugar can be reduced to less than half and the final composition will still serve as an effective binder.

## Claims

1. A method of molding material characterized by:
(A) preparing dissociated lignocellulosic material for molding by;
(1) packing lignocellulosic material in a divided, moist form in a pressure vessel having a valved outlet,
(2) with the valve closed, rapidly filling the pressure vessel with steam at a pressure of at least 2,750 kPa (400 psi) to bring substantially all of the lignocellulosic material to a temperature in the range of 185°C to 240°C in less than 60 seconds to thermally soften the lignocellulosic material into a plastic condition;
(3) as soon as the plastic condition has been attained, opening the valved outlet and instantly and explosively expelling the lignocellulosic material from the pressure vessel to atmosphere,
and wherein the explosive expulsion breaks the chemical cross-link between the lignin and hemicellulose of the lignocellulosic material and produces a mixture of water-soluble chemical substances, whereby dissociated lignocellulosic material is produced;
(B) washing the said dissociated lignocellulosic material with water to remove substantially all or only some of the said water-soluble chemical substances;
(C) adding a cross-linking agent and catalyst therefor to the washed dissociated lignocellulosic material to provide a moldable dissociated lignocellulosic material, said cross-linking agent being selected from the group consisting of a five carbon sugar, a six carbon sugar, their glycosides and conjugates, furfural, and hydroxymethylfurfural and mixtures thereof, paraformaldehyde, or some other crosslinking agent, and said catalyst being an acidic catalyst;
(D) drying the moldable dissociated lignocellulosic material to a water content of about 5 % or less
(E) packing the moldable material into a heated, vented mold;
(F) applying sufficient pressure in the range of 135 - 10,400 Kpa (20 - 1,500 psi) for a sufficient time in the range of 5 seconds to 30 minutes and at a sufficient temperature in the range of 70°C to 260°C to the moldable material in the mold to cause it to form a rigid product; and
(G) discharging the molded product from the mold.

2. A method according to claim 1, further characterized in that the mold is preheated to a temperature between approximately 70-260°C and wherein a mold platen preheated to approximately 300°C is applied to the molded product after it is formed.

3. A method according to claim 1, further characterized in that a molded product having a density like that of corkboard is produced, and the mold is preheated to a temperature between approximately 70-110°C, and a pressure between approximately 135 - 620 kPa (20 - 90 psi) is applied to the material in the mold.

4. A method according to claim 1, further characterized in that a molded product having a density like that of furniture board is produced, and the mold is preheated to a temperature between approximately 120-145°C, and a pressure between approximately 690 - 4,800 kPa (100 - 700 psi) is applied to the material in the mold.

5. A method according to claim 1, further characterized in that a preservative substance is added to the dissociated lignocellulosic material prior to molding.

6. A method according to claim 1, further characterized in that a water repellent material is added to the dissociated lignocellulosic material prior to molding.

7. A method according to claim 1, further characterized in that a fire retardant material is added to the dissociated lignocellulosic material prior to molding.

8. A method according to claim 1, further characterized in that said acidic catalyst is selected from the group comprising a mineral acid, an organic acid and a Lewis acid.

9. A method according to claim 1, further characterized in that the molded product is transferred from the hot mold to an unheated mold under similar pressure to allow the molded product to cure.

10. A method of producing a molded product according to claim 1, including the step of mixing together the dissociated lignocellulosic material and filler materials selected from the group comprising wood wafers, wood fibers, straw fibers, bagasse fibers, sawdust, fiber glass fibers, asbestos fibers, carbon fibers, fertilizer, coal and sand.

11. A method according to claim 10, further characterized in that the dissociated lignocellulosic material contains excessive moisture and the moisture content is reduced to a suitable level of about 5 % or less before molding.

12. A method according to claim 10 or 11, further characterized in that the selected material is sawdust, which is used in a proportion of 4 parts or less of sawdust:1 part dissociated lignocellulosic material.

13. A method according to claim 10 or 11, further characterized in that the mold is preheated to a temperature between approximately 70-260°C.

14. A method according to claim 13, further characterized in that a mold platen preheated to approximately 300°C, is applied to the molded product after it is formed.

15. A method according to claim 10 or 11, further characterized in that a preservative substance is added to the material to be molded prior to molding.

16. A method according to claim 10 or 11, further characterized in that a water repellent material is added to the material to be molded prior to molding.

17. A method according to claim 10 or 11, further characterized in that a fire retardant material is added to the material to be molded prior to molding.

18. A method according to claim 10 or 11, further characterized in that the molded product is transferred from the hot mold to an unheated mold under similar pressures to allow the molded product to cure.

19. A method according to claim 1, further characterized in that said cross-linking agent is selected from the group comprising 5-carbon and 6-carbon sugars in free or combined form.

20. A method according to claim 1, further characterized in that the said cross-linking agent comprises hydroxymethylfurfural.

21. A method according to claim 1, further characterized in that the said cross-linking agent comprises furfural.

22. A method according to claim 1, further characterized in that the concentration of the acidic catalyst in the crosslinking agent is in the range of about .2 % to 1.0 % and the concentration of the cross-linking agent in the cross-linking agent/catalysts composition is in the range of approximately 2 % to 12 %.

23. A method according to claim 10 or 11, further characterized in that the cross-linking agent and catalysts are impregnated into the filler material prior to molding.

24. The product produced by the method of claim 1.

25. The product produced by the method of claim 10 or 11.

26. A method according to claim 1, further characterized in that a molded product having a high density is produced, and the mold is preheated to a temperature between approximately 120°C to 165°C, and a pressure between approximately 4,800 - 10,400 kPa (700 to 1500 psi) is applied to the material in the mold.

## Patentansprüche

1. Verfahren zum Materialformen, gekennzeichnet durch:
(A) Herstellen eines dissoziierten Lignozellulosematerials zum Formen durch
(1) Einbringen von Lignozellulosematerial in zerteilter, feuchter Form in ein Druckgefäß mit einem Ventilauslaß,
(2) bei geschlossenem Ventil rasches Füllen des Druckgefäßes mit Wasserdampf bei einem Druck von mindestens 2.750 kPa (400 psi), um im wesentlichen das gesamte Lignozellulosematerial auf eine Temperatur im Bereich von 185°C bis 240°C in weniger als 60 Sekunden zu bringen, damit das Lignozellulosematerial in einen plastischen Zustand thermisch erweicht wird;
(3) nach Erreichen des plastischen Zustands Öffnen des Auslaßventils und plötzliches und explosionsartiges Ausstoßen des Lignozellulosematerials aus dem Druckgefäß in die Atmosphäre,
wobei der explosionsartige Ausstoß die chemische Vernetzung zwischen dem Lignin und der Hemizellulose des Lignozellulosematerials aufbricht und eine Mischung von wasserlöslichen chemischen Substanzen erzeugt, wodurch dissoziiertes Lignozellulosematerial erhalten wird;
(B) Waschen des dissoziierten Lignozellulosematerials mit Wasser zwecks Entfernens von im wesentlichen den gesamten oder nur einem Teil der wasserlöslichen chemischen Substanzen;
(C) Zusetzen eines Vernetzungsmittels und eines Katalysators dafür zum gewaschenen dissoziierten Lignozellulosematerial zwecks Schaffung eines formbaren dissoziierten Lignozellulosematerials, wobei das Vernetzungsmittel ausgewählt ist aus der Gruppe bestehend aus einem C₅-Zucker, einem C₆-Zucker, deren Glykosiden und Konjugaten, Furfural, Hydroxymethylfurfural und Mischungen davon, Paraformaldehyd oder irgendeinem anderen Vernetzungsmittel, und der Katalysator ein saurer Katalysator ist;
(D) Trocknen des formbaren dissoziierten Lignozellulosematerials auf einen Wassergehalt von etwa 5 % oder weniger;
(E) Einbringen des formbaren Materials in eine beheizte und belüftete Form;
(F) Aufbringen eines ausreichenden Drucks im Bereich von 135 bis 10.400 kPa (20 - 1.500 psi) über einen ausreichenden Zeitraum im Bereich von 5 Sekunden bis 30 Minuten und bei einer ausreichenden Temperatur im Bereich von 70°C bis 260°C auf das formbare Material in der Form zur Bildung eines starren Produkts; und
(G) Entfernen des geformten Produkts aus der Form.

2. Verfahren nach Anspruch 1, weiters dadurch gekennzeichnet, daß die Form auf eine Temperatur zwischen etwa 70 und 260°C vorerhitzt wird und wobei eine auf etwa 300°C vorerhitzte Formplatte auf das geformte Produkt nach Formung desselben aufgebracht wird.

3. Verfahren nach Anspruch 1, weiters dadurch gekennzeichnet, daß ein geformtes Produkt mit einer Dichte ähnlich jener von Plattenkork hergestellt wird und die Form auf eine Temperatur zwischen etwa 70 und 110°C vorerhitzt und ein Druck zwischen etwa 135 und 620 kPa (20 - 90 psi) auf das Material in der Form aufgebracht wird.

4. Verfahren nach Anspruch 1, weiters dadurch gekennzeichnet, daß ein geformtes Produkt mit einer Dichte ähnlich jener von Möbelplatten hergestellt wird und die Form auf eine Temperatur zwischen etwa 120 und 145°C vorerhitzt und eine Druck zwischen etwa 690 und 4.800 kPa (100 - 700 psi) auf das Material in der Form aufgebracht wird.

5. Verfahren nach Anspruch 1, weiters dadurch gekennzeichnet, daß vor dem Formen ein Konservierungsmittel zum dissoziierten Lignozellulosematerial zugegeben wird.

6. Verfahren nach Anspruch 1, weiters dadurch gekennzeichnet, daß vor dem Formen ein wasserabstoßendes Mittel zum dissoziierten Lignozellulosematerial zugegeben wird.

7. Verfahren nach Anspruch 1, weiters dadurch gekennzeichnet, daß vor dem Formen ein feuerhemmendes Mittel zum dissoziierten Lignozellulosematerial zugegeben wird.

8. Verfahren nach Anspruch 1, weiters dadurch gekennzeichnet, daß der saure Katalysator ausgewählt ist aus der Gruppe bestehend aus einer Mineralsäure, einer organischen Säure und einer Lewis-Säure.

9. Verfahren nach Anspruch 1, weiters dadurch gekennzeichnet, daß das geformte Produkt aus der heißen Form in eine unbeheizte Form unter ähnlichem Druck gegeben wird, um das geformte Produkt aushärten zu lassen.

10. Verfahren zur Herstellung eines Formkörpers nach Anspruch 1, umfassend den Schritt des Mischens des dissoziierten Lignozellulosematerials mit Füllstoffen, ausgewählt aus der Gruppe umfassend Holzscheiben, Holzfasern, Strohfasern, Bagassefasern, Sägemehl, Glasfasern, Asbestfasern, Kohlefasern, Düngemittel, Kohle und Sand.

11. Verfahren nach Anspruch 10, weiters dadurch gekennzeichnet, daß das dissoziierte Lignozellulosematerial einen übermäßigen Feuchtigkeitsgehalt aufweist und der Feuchtigkeitsgehalt vor dem Formen auf einen geeigneten Grad von etwa 5 % oder weniger gebracht wird.

12. Verfahren nach Anspruch 10 oder 11, weiters dadurch gekennzeichnet, daß das ausgewählte Material Sägemehl ist, das in einem Verhältnis von 4 Teilen oder weniger Sägemehl : 1 Teil dissoziiertem Lignozellulosematerial verwendet wird.

13. Verfahren nach Anspruch 10 oder 11, weiters dadurch gekennzeichnet, daß die Form auf eine Temperatur zwischen etwa 70 und 260°C vorerhitzt wird.

14. Verfahren nach Anspruch 13, weiters dadurch gekennzeichnet, daß eine auf etwa 300°C vorerhitzte Formplatte auf den Formkörper nach Formen desselben aufgebracht wird.

15. Verfahren nach Anspruch 10 oder 11, weiters dadurch gekennzeichnet, daß vor dem Formen ein Konservierungsmittel zu dem zu formenden Material zugegeben wird.

16. Verfahren nach Anspruch 10 oder 11, weiters dadurch gekennzeichnet, daß vor dem Formen ein wasserabstoßendes Mittel zu dem zu formenden Material zugegeben wird.

17. Verfahren nach Anspruch 10 oder 11, weiters dadurch gekennzeichnet, daß vor dem Formen ein feuerhemmendes Mittel zu dem zu formenden Material zugegeben wird.

18. Verfahren nach Anspruch 10 oder 11, weiters dadurch gekennzeichnet, daß der Formkörper aus der heißen Form in eine unbeheizte Form unter ähnlichen Druckverhältnissen verlagert wird, damit der Formkörper aushärten kann.

19. Verfahren nach Anspruch 1, weiters dadurch gekennzeichnet, daß das Vernetzungsmittel ausgewählt ist aus der Gruppe umfassend C₅- und C₆-Zucker in freier oder gebundener Form.

20. Verfahren nach Anspruch 1, weiters dadurch gekennzeichnet, daß das Vernetzungsmittel Hydroxymethylfurfural umfaßt.

21. Verfahren nach Anspruch 1, weiters dadurch gekennzeichnet, daß das Vernetzungsmittel Furfural umfaßt.

22. Verfahren nach Anspruch 1, weiters dadurch gekennzeichnet, daß die Konzentration des sauren Katalysators im Vernetzungsmittel im Bereich von etwa 0,2 % bis 1,0 % liegt und die Konzentration des Vernetzungsmittels in der Vernetzungsmittel/Katalysator-Zusammensetzung im Bereich von etwa 2 % bis 12 % liegt.

23. Verfahren nach Anspruch 10 oder 11, weiters dadurch gekennzeichnet, daß das Vernetzungsmittel samt Katalysator vor dem Formen in den Füllstoff imprägniert werden.

24. Durch das Verfahren nach Anspruch 1 hergestelltes Produkt.

25. Durch das Verfahren nach Anspruch 10 oder 11 hergestelltes Produkt.

26. Verfahren nach Anspruch 1, weiters dadurch gekennzeichnet, daß ein Formkörper mit einer hohen Dichte erzeugt wird und die Form auf eine Temperatur zwischen etwa 120°C und 165°C vorerhitzt wird und ein Druck zwischen etwa 4.800 und 10.400 kPa (700 - 1500 psi) auf das Material in der Form aufgebracht wird.

## Revendications

1. Procédé de moulage d'un matériau, caractérisé par les étapes suivants:
(A) préparation d'un matériau de lignocellulose dissocié pour le moulage, en
(1) introduisant du matériau lignocellulosique en forme divisée humide dans un récipient de pression ayant une sortie munie d'un soupape,
(2) remplissant, le soupape fermé, rapidement le récipient de pression de la vapeur d'eau à une pression d'au moins 2.750 kPa (400 psi) afin d'amener essentiellement tout le matériau lignocellulosique à une température dans l'ordre de 185°C à 240°C en moins de 60 secondes de manière à ramollir thermiquement en état plastifié le matériau lignocellulosique;
(3) l'état plastifié ayant atteint, ouvrant la sortie munie du soupape et expulsant instantanément et explosivement du récipient de pression à l'atmosphère le matériau lignocellulosique;
cependant que l'expulsion explosive fait rompre la réticulation entre la lignine et l'hémicellulose du matériau lignocellulosique et crée un mélange de matières chimiques solubles dans l'eau, produisant ainsi du matériau lignocellulosique;
(B) lavage du matériau lignocellulosique dissocié avec de l'eau pour éliminer essentiellement en tout ou seulement en partie les matières chimiques solubles dans l'eau;
(C) addition au matériau lignocellulosique dissocié lavé, d'un agent de réticulation et d'un catalyseur pour ce-ci, en vue de prévoir du matériau lignocellulosique dissocié apte au moulage, l'agent de réticulation étant choisi parmi le groupe constitué par un sucre à 5 carbones, un sucre à 6 carbones, leurs glycosides et conjugués, le furfural et l'hydroxymethylfurfural, et leurs mélanges, le paraformaldéhyde, ou quelqu'autre agent de réticulation, et le catalyseur étant un catalyseur acide;
(D) séchage du matériau lignocellulosique dissocié apte au moulage à un téneur d'eau d'environ 5 % ou moins;
(E) introduction du matériau apte au moulage dans un moule chauffé et ventilé;
(F) application sur le matériau apte au moulage se trouvant dans le moule, d'une pression suffisante dans l'ordre de 135 à 10.400 kPa (20 - 1.500 psi) pendant un temps suffisant dans l'ordre de 5 secondes à 30 minutes et à une température suffisante dans l'ordre de 70°C à 260°C de maniére à le faire former un produit rigide; et
(G) démoulage du produit moulé.

2. Procédé selon la revendication 1, en plus caractérisé en ce que le moule est préchauffé à une température entre 70 et 260°C environ, une plaque à mouler préchauffée à environ 300°C étant appliquée au produit moulé après son moulage.

3. Procédé selon la revendication 1, en plus caractérisé en ce qu'il est produit un produit moulé ayant une densité similaire à celle du liège en plaques, ledit moule étant préchauffé à une température entre 70 et 110°C environ et une pression entre 135 et 620 kPa (20 - 90 psi) environ étant appliquée au matériau dans le moule.

4. Procédé selon la revendication 1, en plus caractérisé en ce qu'il est produit un produit moulé ayant une densité similaire à celle des plaques pour meubles, ledit moule étant préchauffé à une température entre 120 et 145°C environ et une pression entre 690 et 4.800 kPa (100 - 700 psi) environ étant appliquée au matériau dans le moule.

5. Procédé selon la revendication 1, en plus caractérisé en ce qu'un agent conservateur est ajouté au matériau lignocellulosique dissocié avant le moulage.

6. Procédé selon la revendication 1, en plus caractérisé en ce que un agent hydrofuge est ajouté au matériau lignocellulosique dissocié avant le moulage.

7. Procédé selon la revendication 1, en plus caractérisé en ce que un agent ignifuge est ajouté au matériau lignocellulosique dissocié avant le moulage.

8. Procédé selon la revendication 1, en plus caractérisé en ce que ledit catalyseur acide est choisi parmi le groupe constitué par un acide minéral, un acide organique et un acide Lewis.

9. Procédé selon la revendication 1, en plus caractérisé en ce que le produit moulé est transféré du moule chaud à un moule non-chauffé sous une pression similaire afin de laisser cuire le produit moulé.

10. Procédé de fabrication d'un produit moulé selon la revendication 1, comprenant l'étape de melanger le matériau lignocellulosique dissocié avec des matières de charge choisis parmi les galettes du bois, les fibres du bois, les fibres de pailles, les fibres de bagasse, la sciure de bois, les libres de verre, les libres d'amiante, les fibres de carbone, des substances fertilisantes, du charbon et du sable.

11. Procédé selon la revendication 10, en plus caractérisé en ce que le matériau lignocellulosique dissocié contient de l'humidité excessive et le taux d'humidité, avant le moulage est reduit à un taux approprié d'environ 5 % ou moins.

12. Procédé selon la revendication 10 ou 11, en plus caractérisé en ce que le matériau choisi est de la sciure de bois utilisée dans une proportion de 4 parts ou moins de la sciure de bois : 1 part du matériau lignocellulosique dissocié.

13. Procédé selon la revendication 10 ou 11, en plus caractérisé en ce que le moule est préchauffé à une température de 70 à 260°C environ.

14. Procédé selon la revendication 13, en plus caractérisé en ce qu'une plaque à mouler préchauffée à environ 300°C est appliquée au produit moulé après son moulage.

15. Procédé selon la revendication 10 ou 11, en plus caractérisé en ce qu'un conservateur est ajouté au matériau lignocellulosique dissocié avant le moulage.

16. Procédé selon la revendication 10 ou 11, en plus caractérisé en ce qu'un agent hydrofuge est ajouté au matériau lignocellulosique dissocié avant le moulage.

17. Procédé selon la revendication 10 ou 11, en plus caractérisé en ce qu'un agent ignifuge est ajouté au matériau lignocellulosique dissocié avant le moulage.

18. Procédé selon la revendication 10 ou 11, en plus caractérisé en ce que le produit moulé est transféré du moule chaud à un moule non-chauffé sous pression similaire afin de laisser cuire le produit moulé.

19. Procédé selon la revendication 1, en plus caractérisé en caractérisé en ce que l'agent de réticulation est choisi parmi les sucres à 5 et 6 carbones en état libre ou associé.

20. Procédé selon la revendication 1, en plus caractérisé en ce que l'agent de réticulation comprend l'hydroxymethylfurfural.

21. Procédé selon la revendication 1, en plus caractérisé en ce que l'agent de réticulation comprend le furfural.

22. Procédé selon la revendication 1, en plus caractérisé en ce que la concentration du catalyseur acide dans l'agent de réticulation est dans l'ordre de 0,2 % à 1,0 % environ et la concentration de l'agent de réticulation dans la composition agent de réticulation/catalyseur est dans l'ordre des 2 % à 12 % environ.

23. Procédé selon la revendication 10 ou 11, en plus caractérisé en ce que l'agent de réticulation et les catalyseurs sont imprégnés dans le matériau de charge avant le moulage.

24. Produit fabriqué selon le procédé de la revendication 1.

25. Produit fabriqué selon le procédé de la revendication 10 ou 11.

26. Procédé selon la revendication 1, en plus caractérisé en ce qu'un produit moulé d'une haute densité est fabriqué, le moule étant prechauffé à une température entre 120°C et 165°C environ, une pression de 4.800 à 10.400 kPa (700 - 1500 psi) environ étant appliquée au matériau dans le moule.
